Europäisches Patentamt

(19) European Patent Office

Office européen des brevets

(11) Publication number: **0 010 351**
**A1**

(12) **EUROPEAN PATENT APPLICATION**

(21) Application number: **79301834.2**

(22) Date of filing: **06.09.79**

(51) Int. Cl.³: **F 16 K 31/42**

(30) Priority: **16.10.78 US 951570**

(43) Date of publication of application:
**30.04.80 Bulletin 80/9**

(84) Designated Contracting States:
**DE FR GB IT SE**

(71) Applicant: **MODULAR CONTROLS CORPORATION**
**742 North Princeton**
**Villa Park Illinois 60181(US)**

(72) Inventor: **Kosarzecki, Constantine**
**415 Cypress Court**
**Schaumburg Illinois 60172(US)**

(74) Representative: **Waite, Anthony William et al,**
**MARKS & CLERK Alpha Tower ATV Centre**
**Birmingham B1 1TT(GB)**

(54) Normally closed solenoid valve.

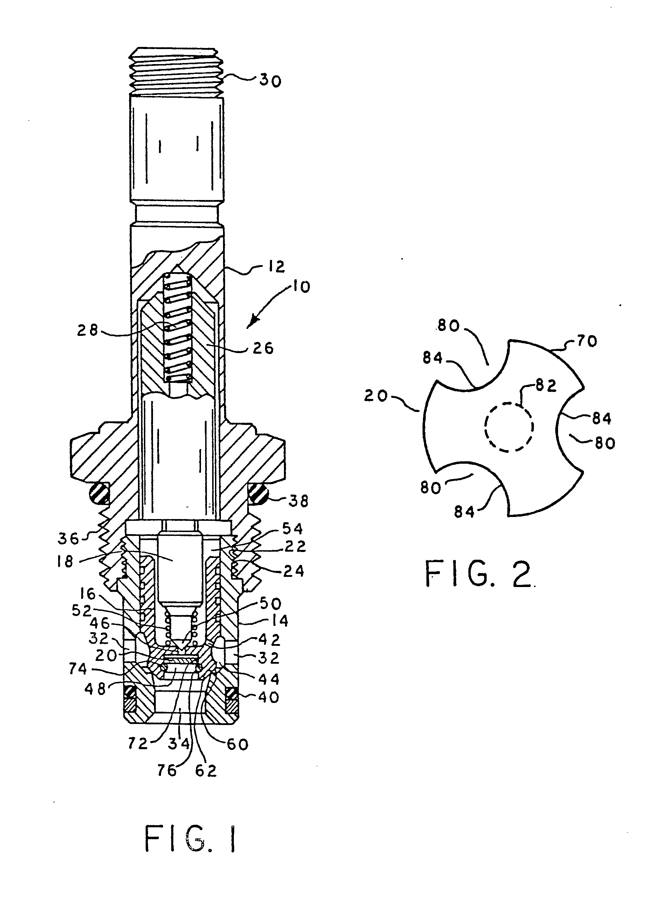

(57) There is disclosed a normally closed solenoid valve (Figure 1) arranged to remain in an open condition notwithstanding reverse fluid flow through the valve. The valve includes an outer casing (14) having a first bore means (32) and a second bore means (34). A poppet (16) within the casing (14) is movable between open and closed valve positions. The poppet (16) includes an input orifice (42) and an output orifice (46). A plunger (18) forces the poppet (16) into the closed valve position while blocking its output orifice (46) and unblocks the output orifice (46) for permitting the poppet (16) to move into the open valve position. Fluid flow restricting means (20) disposed between the output orifice (46) and the second bore means (34) restricts fluid flow between the output orifice (46) and the second bore means (34) to one direction to permit the valve to open while precluding the valve from closing upon reverse fluid flow through the valve from the second bore means (34) to the first bore means (32).

FIG. I

Croydon Printing Company Ltd.

The present invention is generally directed to a normally closed valve which may be actuated by a solenoid or the like, and in particular, to a poppet valve which is arranged to remain in an open condition notwithstanding reverse fluid flow through the valve.

Valves, which may be externally energized for controlling the flow of fluids, have taken many forms. One form of valve which has found wide-spread acceptance is a normally closed poppet valve which may be externally energized by a solenoid.

Such valves include an outer casing having one or more first bores and a second bore communicating with respective fluid lines which contain the fluid, the flow of which is to be controlled. A poppet within the outer casing is movable axially within the casing between an open valve position and a closed valve position. The poppet includes an input orifice communicating with the first bores and an output orifice communicating with the second bore. A plunger, which is arranged to be actuated by a solenoid, is also within the outer casing and is axially movable within the outer casing between a first position and a second position. The plunger has a tip end, which, when in the first position forces the poppet into the closed valve position with the tip end blocking the output orifice of the poppet. When the plunger is moved by the solenoid to the second position, it unblocks the output orifice of the poppet and permits fluid to flow from the first bores, through the input orifice of the poppet, through the output orifice, and through the second bore. The input orifice of the poppet is substantially smaller

0010351

in dimension than the output orifice of the poppet so that the fluid flow volume of the fluid flowing into the input orifice is substantially less than the fluid flow volume flowing from the output orifice. Also, the poppet surfaces exposed to the flowing fluid and the internal surfaces of the outer casing are such that they present, with the differential fluid flow volumes of the fluid, a differential pressure across the poppet which causes the poppet to move into the open valve position allowing unrestricted fluid flow through the valve between the first bores and the second bore.

To maintain the valve in its open valve condition, it is necessary to maintain the electrical energy to the solenoid. When closing of the valve is desired, the energy to the solenoid is removed and a return spring within the outer casing acting upon the plunger causes the plunger to move back to its first position causing the poppet to move to its closed valve position.

While valves of the foregoing variety have been found to be generally successful, they exhibit an inherent problem when fluid is caused to flow in a reversed direction through the valve. Because the poppet is freely movable within the outer casing, and is not mechanically lined to the plunger, when fluid flows in a forward direction from the first bore to the second bore of the outer casing, the poppet will remain in its open valve condition. However, when fluid is caused to flow in the reverse direction, from the second bore to the first bores, the fluid is freely allowed to flow also through the output orifice of the poppet and then through the input orifice of the poppet. As a result, a differential in pressure results across the poppet which, upon reaching a predetermined level of pressure, can cause the poppet to return to the closed valve position even though the plunger is being held at its second position by the solenoid. As a consequence, prior art valves of the foregoing variety have only been suitable for controlling fluid flow in only one direction through the valve.

It is therefore a general object of the present invention to provide a new and improved normally closed poppet valve which may be energized by a solenoid or the like.

It is a further object of the present invention to provide such a poppet valve which includes means by which it is assured that the valve will remain in an open valve condition notwithstanding reverse fluid flow through the valve.

It is still a further object of the present invention to provide a poppet valve which is arranged to remain in an open valve condition notwithstanding reverse fluid flow through the valve which includes a fluid flow restricting means disposed between the output orifice of the poppet and the second bore of the outer valve casing for restricting fluid flow through the poppet to only one direction so as to permit the poppet to move into an open valve position but precluding the poppet from moving to a closed valve position upon reverse fluid flow through the valve.

The invention provides a poppet valve comprising an outer casing having a first bore means and a second bore means and a poppet within the outer casing. The poppet is movable axially between an open valve position and a closed valve position and includes an input orifice communicating with the first bore means and an output orifice communicating with the second bore means. A plunger, also within the outer casing, has a tip end, and is axially movable within the outer casing between a first position for moving the poppet into the closed valve position with the tip blocking the output orifice and a second position to unblock the output orifice and to permit fluid to flow from the first bore means, through the input orifice, through the output orifice, and through the second bore means for causing the poppet to move into the open valve position allowing unrestricted fluid flow through the valve between the first and second bore means. The poppet valve of the present invention also includes a fluid flow restricting means between the output orifice and the second bore means for limiting fluid flow to only one direction between the output orifice and the second bore means to permit the valve to open while precluding the valve from closing notwithstanding reverse fluid flow through the valve from the second bore means to the first bore means.

The features of the present invention which are believed to be novel are set forth with particularity in the appended claims. The invention, together with further objects and advantages thereof, may best be understood by the reference to the following description taken in connection with the accompanying drawings, in the several figures of which like reference numerals identify like elements, and in which:

Fig. 1 is a cross-sectional view of a valve assembly embodying the present invention; and

Fig. 2 is a front plan view of a fluid flow restricting means embodying the present invention.

Referring now to Fig. 1, the valve assembly 10 thereshown generally includes an outer casing comprising an upper casing portion 12 and a lower casing portion 14, a poppet 16, a plunger 18, and a fluid flow restricting means 20. The upper outer casing portion 12 and the lower outer casing portion 14 are joined together by means of an internal thread 22 carried by the upper housing portion 12 meshing with external threads 24 carried by the lower outer casing portion 14.

Within the upper outer casing portion 12 is a magnetic core 26 which is coupled to the plunger 18, and a return spring 28. The upper outer casing portion 12 is cylindrical in configuration and is dimensioned for receiving a solenoid (not shown) which is housed in a suitable housing having a through aperture which receives the outer casing portion 12 so that the solenoid encircles the magnetic core 26. The solenoid housing is secured to the valve by a nut threaded onto an external thread 30 carried by the upper outer casing portion 12 at the top end thereof.

As well known, when the valve is to be opened, the solenoid is energized producing a magnetic field which causes the magnetic core 26 to rise up within the outer casing from a first position as shown in Fig. 1 to a second position above the poppet 16. When the plunger 18 moves away from the poppet 16, the poppet 16 will move from its closed valve position as shown in Fig. 1 to an open valve position in a manner well known in the art.

When the valve is to be closed, the electrical energy to the solenoid is removed, and the return spring 28 forces the core 26 and plunger 18 downwardly to the first plunger position as shown in Fig. 1 and to thus force the

0010351

poppet 16 downwardly to its closed valve position as shown in Fig. 1.

The lower outer casing portion 14 includes a first bore means comprising a plurality of radially disposed bores 32 and a second bore means comprising a bore 34. The valve 10 is suitably dimensioned for being received within a valve bore contained within a valve body preferably formed from a solid block of metallic material having a first fluid channel or line communicating with the first bores 32 and a second fluid channel or line communicating with the second bore 34. The valve 10 is secured within the valve bore by means of an external thread 36 carried by the lower outer casing portion 12 meshing with corresponding threads (not shown) of the valve bore. A pair of O-rings 38 and 40 provide a fluid tight seal between the outer periphery of the valve 10 and the inner periphery of the valve bore.

The poppet 16 and the plunger 18 are arranged in a generally coaxial configuration within the lower outer casing portion 14. The poppet 16 includes an input orifice 42 communicating with the first bores 32 by an annular channel 44 and an output orifice 46 communicating with the second bore 34 through an enlarged bore 48.

The plunger 18 has a tip end 50 which blocks the output orifice 46 of the poppet 16 when it is in its first position for causing the poppet 16 to be in its closed valve position. An annular spring 52 which circumscribes the plunger and acts against the poppet 16 assists the solenoid in retracting the plunger 18 from the poppet 16 upon energization of the solenoid for opening the valve.

When the valve is to be opened, as previously described, the plunger 18 is pulled upwardly from the poppet 16 to a second position by the solenoid acting upon the magnetic core 26 against the return spring 28 and through the assistance of the spring 52. At this point in time, fluid will flow from the first bores 32, through the annular channel 44, and into the input orifice 42. Because the input orifice 42 communicates the internal area 54 of the outer casing with the first bores 32, the internal area 54 will have been filled with fluid. The influx of fluid into the input orifice 42 will cause fluid to flow out of the output orifice 46 of the poppet.

As well known, because the input orifice 42 is substantially smaller in dimension as compared to the dimension of the output orifice 46, the fluid flow volume rate of the fluid exiting the poppet valve through the output orifice 56 will be greater than the fluid flow volume rate of the fluid entering the poppet through the input orifice 42. Also, as well known, the fluid flowing through the poppet acts against various surface areas of the valve, and this, together with the differential in the fluid flow volume rates into and out of the poppet 16 will cause the poppet 16 to move upwardly within the outer casing. As a result, the valve seat surface 60 of the poppet will be separated from the valve seat 62 of the outer casing to provide unrestricted flow of fluid between the first bores 32 and the second bore 34.

However, as alluded to previously, valves of this type in the prior art have been able to control fluid flow in only one direction between the first bores 32 and the second bore 34. Specifically, prior art valves have only been suitable for fluid flow from the first bores 32 to and through the second bore 34. Fluid flow in the reverse direction from the second bore 34 to and through the first bores 32 has caused fluid to enter the poppet 16 through the output orifice 46 and exit the poppet out of input orifice 42. As a result, a reverse poppet condition occurs whereby the poppet, which is free to move within the outer casing, tends to return to its closed valve position as shown in Fig. 1.

In order to preclude the aforementioned inadvertent closing of the valve from occurring, the valve 10 of the present invention includes a fluid flow restricting means disposed between the output orifice 46 and the second bore 34. The fluid flow restricting means 20 between the output orifice 46 and the second bore 34 limits fluid flow through the poppet output orifice 46 to only one direction to permit the poppet 16 to move upwardly for opening the valve as previously described while precluding the poppet from moving downwardly to its closed valve position upon reverse fluid flow through the valve from the second bore 34 to the first bores 32.

The fluid flow restricting means 20, as best seen in Fig. 2, takes the form of a solid metal sheet formed as a disc which has an outer perimeter 70 which substantially corresponds to the inner periphery 72 of the enlarged bore 48. The enlarged bore 48 includes a circumferential groove 74 which contains a split ring 76. As seen in Fig. 1, the split ring 76 loosely confines the fluid flow restricting means 20 in juxtaposition to the output orifice 46. As a result, the restricting means 20 is carried by the poppet 16 and will be spaced from the output orifice 46 in response to fluid flow out of the output orifice 46 to the second bore 34. Also, the restricting means 20 will be in abutment with and in tight sealing engagement with the output orifice 46 responsive to reverse fluid flow through the valve from the second bore 34 to the first bores 32 for blocking fluid flow into the output orifice 46.

0010351

Referring again to Fig. 2, the restricting means 20 further includes fluid flow openings 80 formed axially therethrough in the area of the restricting means between the perimeter 70 of the restricting means sheet and the juxtaposed periphery of the output orifice 46 as shown by the dotted line 82. The fluid flow openings 80 take the form of cut-out portions extending inwardly from the perimeter 70 of the restricting means 20. As shown, the cut-out portions are preferably arcuate in configuration having inwardly extending arcuate surfaces 84.

As a result of the foregoing, it can be seen that the restricting means 20 will allow fluid to flow through the poppet from the input orifice 42 to and through the output orifice 46 in the previously described manner to cause the poppet to move upwardly when opening of the valve is desired. However, the restricting means 20 will prevent fluid from flowing into the output orifice 46 upon reverse fluid flow through the valve from the second bore 34 to and through the first bores 32 to preclude inadvertent closing of the valve. Hence, the present invention clearly provides a new and improved valve assembly which may be actuated by a solenoid or other external means which provides for both forward and reverse fluid flow through the valve without inadvertent closing of the valve absent de-energization of the solenoid.

While a particular embodiment of the present invention has been shown and described, modifications may be made, and it is intended in the appended claims to cover all such changes and modifications which fall within the true spirit and scope of the invention.

C L A I M S

1. A poppet valve arranged to remain in an open condition notwithstanding reverse fluid flow through said valve including: an outer casing (14) having a first bore means (32) and a second bore means (34), a poppet (16) within said outer casing (14) movable axially between an open valve position and a closed valve position, and including an input orifice (42) communicating with said first bore means (32) and an output orifice (46) communicating with said second bore means, a plunger (18) also within said outer casing (14) having a tip end (50) and being axially movable within said outer casing (14) between a first position for moving said poppet (16) into said closed valve position with said tip end (50) blocking said output orifice (46) and a second position to unblock said output orifice (46) and to permit fluid to flow from said first bore means (32), through said input orifice (42), through said output orifice (46), and through said second bore means (34) for causing said poppet (16) to move into said open valve position allowing unrestricted fluid flow through said valve between said first and second bore means (32, 34); the poppet valve characterized by fluid flow restricting means (20) between said output orifice (46) and said second bore means (34) for limiting fluid flow to only one direction between said output orifice (46) and said second bore means (34) to permit said valve to open while precluding said valve from closing notwithstanding reverse fluid flow through said valve from said second bore means (34) to said first bore means (32).

2. A poppet valve as defined in claim 1 further characterized in that said fluid flow restricting means (20) is carried by said poppet (16).

3. A poppet valve as defined in claim 2 further characterized in that said poppet (16) includes an enlarged bore (48) between said output orifice (46) and said second bore means (34) and said fluid flow restricting means (20) is seated within said enlarged bore (48) in juxtaposition to said output orifice (46).

4. A poppet valve as defined in claim 3 further characterized in that said fluid flow restricting means (20) is loosely seated within said enlarged bore (48) for being spaced from said output orifice (46) in response to fluid flow from said output orifice (46) to said second bore means (34) and for being in abutment with and in tight sealing engagement with said output orifice (46) responsive to reverse fluid flow through said valve from said second bore means (34) to said first bore means (32).

5. A poppet valve as defined in claim 4 further characterized in that said fluid flow restricting means (20) comprises a solid sheet of material being greater in dimension than the dimension of said output orifice (46) and including fluid flow openings (80) axially therethrough in the area of said sheet between the perimeter (70) of said sheet and the juxtaposed periphery (82) of said output orifice (46).

6. A poppet valve as defined in claim 5 further characterized in that said fluid flow restricting means (20) comprises a disc of solid material having a perimeter (70) substantially corresponding to the dimension of said enlarged bore (48), said disc including a plurality of cut-out portions (84) extending inwardly from the perimeter thereof.

7. A poppet valve as defined in claim 6 further characterized in that said inwardly extending cut-out portions (84) are arcuate in configuration.

8. A poppet valve as defined in claim 7 further characterized in that said enlarged bore (48) includes a circumferential groove (74) and wherein said valve further includes a split ring (76) within said groove (74) for loosely confining said fluid flow restricting means (20) within said enlarged bore (48) in juxtaposition to said output orifice (46).

9. A poppet valve including an outer casing (14) having first bore means (32) and second bore means (34). A poppet (16) within said casing movable axially therein between a first position for closing said valve and a second position for fully opening said valve to permit unrestricted fluid flow between said first bore means (32) and second bore means (34) and having an input orifice (42) communicating with said first bore means (32), and an output orifice (46) communicating with said second bore means (34), said poppet (16) being responsive to fluid flow from said input orifice (42) to and through said output orifice (46) for moving to said second position for opening said valve, the poppet valve characterized by fluid flow restricting means (20) disposed between said output orifice (46) and said second bore means (34) for limiting fluid flow within said poppet (16) to fluid flow from said input orifice (42) to said output orifice (46) for precluding said poppet (16) from moving to said first position for closing said valve upon reverse fluid flow through said valve from said second bore means (34) to said first bore means (32).

AMENDED
CLAIMS

# CLAIMS

1. A poppet valve arranged to remain in an open condition
notwithstanding reverse fluid flow through said valve including:
an outer casing (14) having a first bore means (32) and a second
bore means (34), a poppet (16) within said outer casing (14)
movable axially between an open valve position and a closed valve
position, and including an input orifice (42) communicating with
said first bore means (32) and an output orifice (46) communicating
with said second bore means, a plunger (18) also within said outer
casing (14) having a tip end (50) and being axially movable within
said outer casing (14) between a first position for moving said
poppet (16) into said closed valve position with said tip end
(50) blocking said output orifice (46) and a second position to
unblock said output orifice (46) and to permit fluid to flow from
said first bore means (32), through said input orifice (42),
through said output orifice (46), and through said second bore
means (34) for causing said poppet (16) to move into said open
valve position allowing unrestricted fluid flow through said
valve between said first and second bore means (32, 34); the
poppet valve characterized by said poppet (16) having an inner
circumferential groove (74) spaced from said output orifice (46)
between said second bore means (34) and said output orifice (46),
fluid flow restricting means
within said circumferential groove (74) and a disc (20) loosely
confined in juxtaposition to said output orifice (46) by said
split ring (76) and including peripheral fluid flow openings (80)
for limiting fluid flow to only one direction between said output orifice (46) and said second bore means (34) to permit said
valve to open while precluding said valve from closing notwithstanding reverse fluid flow through said valve from said second
bore means (34) to said first bore means (32).

3. A poppet valve as defined in claim 2 further characterized in that said poppet (16) includes an enlarged bore (48) between said output orifice (46) and said second bore means (34) and said fluid flow restricting means (20) is seated within said enlarged bore (48) in juxtaposition to said output orifice (46).

4. A poppet valve as defined in claim 3 further characterized in that said fluid flow restricting means (20) is loosely seated within said enlarged bore (48) for being spaced from said output orifice (46) in response to fluid flow from said output orifice (46) to said second bore means (34) and for being in abutment with and in tight sealing engagement with said output orifice (46) responsive to reverse fluid flow through said valve from said second bore means (34) to said first bore means (32).

5. A poppet valve as defined in claim 4 further characterized in that said fluid flow restricting means (20) comprises a solid sheet of material being greater in dimension than the dimension of said output orifice (46) and including fluid flow openings (80) axially therethrough in the area of said sheet between the perimeter (70) of said sheet and the juxtaposed periphery (82) of said output orifice (46).

6. A poppet valve as defined in claim 5 further characterized in that said fluid flow restricting means (20) comprises a disc of solid material having a perimeter (70) substantially corresponding to the dimension of said enlarged bore (48), said disc including a plurality of cut-out portions (84) extending inwardly from the perimeter thereof.

7. A poppet valve as defined in claim 6 further characterized in that said enlarged bore (48) includes said circumferential groove (74).

8. A poppet valve including an outer casing (14) having first bore means (32) and second bore means (34), a poppet (16) within said casing movable axially therein between a first position for closing said valve and a second position for fully opening said valve to permit unrestricted fluid flow between said first bore means (32) and second bore means (34) and having an input orifice (42) communicating with said first bore means (32), and an output orifice (46) communicating with said second bore means (34), said poppet (16) being responsive to fluid flow from said input orifice (42) to and through said output orifice (46) for moving to said second position for opening said valve, the poppet valve characterized by planar valve means (20) loosely confined about its perimeter within said poppet (16) in juxtaposition to said output orifice (46) between said output orifice (46) and said second bore means (34) for limiting fluid flow within said poppet (16) to fluid flow from said input orifice (42) to said output orifice (46) for precluding said poppet (16) from moving to said first position for closing said valve upon reverse fluid flow through said valve from said second bore means (34) to said first bore means (32).

0010351

FIG. 1

FIG. 2

# EUROPEAN SEARCH REPORT

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| | DE - B - 2 137 799 (FIAT) <br> * claim 1; fig. 1,2 * <br> & US - A - 3 738 607 <br><br> -- <br><br> CH - A - 317 615 (GEBRÜDER SULZER) <br> * fig. 1,2 * <br><br> -- <br><br> DE - B - 1 271 477 (H. HERBERTZ) <br> * complete document * <br><br> ---- | 1-4, <br> 8,9 <br><br><br><br> 4-8 | F 16 K 31/42 |
| A | | | |

TECHNICAL FIELDS SEARCHED (Int.Cl.²)

F 16 K 15/00
F 16 K 31/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search <br> Berlin | Date of completion of the search <br> 02-11-1979 | Examiner <br> SCHLABBACH |
|---|---|---|

EPO Form 1503.1  06.78